(19) **Europäisches Patentamt / European Patent Office / Office européen des brevets**

(11) **EP 2 709 362 A1**

(12) **EUROPEAN PATENT APPLICATION**
published in accordance with Art. 153(4) EPC

(43) Date of publication:
**19.03.2014 Bulletin 2014/12**

(51) Int Cl.:
*H04N 7/32* (0000.00)

(21) Application number: **12800560.0**

(22) Date of filing: **12.06.2012**

(86) International application number:
**PCT/JP2012/065045**

(87) International publication number:
**WO 2012/173125 (20.12.2012 Gazette 2012/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2011 JP 2011131127**

(71) Applicant: **Nippon Telegraph And Telephone Corporation**
**Tokyo 100-8116 (JP)**

(72) Inventors:
• **BANDOH Yukihiro**
  **Musashino-shi**
  **Tokyo 180-8585 (JP)**

• **MATSUO Shohei**
  **Musashino-shi**
  **Tokyo 180-8585 (JP)**
• **TAKAMURA Seishi**
  **Musashino-shi**
  **Tokyo 180-8585 (JP)**
• **JOZAWA Hirohisa**
  **Musashino-shi**
  **Tokyo 180-8585 (JP)**

(74) Representative: **Ahner, Philippe et al**
**BREVALEX**
**95 rue d'Amsterdam**
**75378 Paris Cedex 8 (FR)**

(54) **VIDEO ENCODING DEVICE, VIDEO DECODING DEVICE, VIDEO ENCODING METHOD, VIDEO DECODING METHOD, VIDEO ENCODING PROGRAM, VIDEO DECODING PROGRAM**

(57) A video encoding device performs motion-compensated inter-frame prediction corresponding to fractional pixel precision using a region-based adaptive interpolation filter (RBAIF) in which a frame is divided into regions and an IF coefficient is adaptively set for each division region, and includes means which constructs a linear simultaneous equation for obtaining an IF coefficient for a division region prescribed by a division position when an optimum division position is selected from among candidates for a prepared division position, and means which obtains the IF coefficient by solving the linear simultaneous equation, wherein the equation generation means diverts a redundant arithmetic processing result in an arithmetic operation of calculating the IF coefficient in a different division region and newly calculates only non-redundant difference information using the arithmetic operation.

FIG. 1

EP 2 709 362 A1

**Description**

TECHNICAL FIELD

The present invention relates to a video encoding device, a video decoding device, a video encoding method, a video decoding method, a video encoding program, and a video decoding program.
Priority is claimed on Japanese Patent Application No. 2011-131127, filed June 13, 2011, the content of which is incorporated herein by reference.

BACKGROUND ART

In video encoding, inter-frame predictive encoding (motion compensation) in which prediction between different frames is executed includes obtaining a motion vector to minimize prediction error power by referring to already decoded frames, performing orthogonal transform/quantization on a residual signal, and generating further encoded data through entropy encoding. Because of this, reduction of prediction error power is essential to increase encoding efficiency and a highly precise prediction method is necessary.
Many tools for increasing the precision of inter-frame predictions have been introduced in a video encoding standard scheme. One tool is fractional pixel precision motion compensation. This is a method of performing the above-described inter-frame prediction using a motion amount less than or equal to that of an integer pixel such as 1/2 pixel precision and 1/4 pixel precision. For example, it is possible to refer to a fractional pixel position of a maximum 1/4 pixel unit in the standard H.264/advanced video coding (AVC). In order to refer to the fractional pixel position, it is necessary to generate a pixel value at the same position. An interpolated image generating method using a linear filter is prescribed. A filter prescribed in the standard H.264 is a linear filter having a fixed filter coefficient. An interpolation filter using the fixed coefficient is abbreviated to "IF" in the following description. When a pixel of 1/2 precision is interpolated for a target pixel, interpolation is performed using a total of 6 integer pixels including three pixels in each of left and right of the target. Interpolation is performed using a total of 6 integer pixels including three pixels in each of an upper part and a lower part in a vertical direction. Filter coefficients are [(1, -5, 20, 20, -5, 1)/32]. After the pixel of 1/2 precision has been interpolated, the pixel of 1/4 precision is interpolated using an average value filter of [1/2, 1/2].
To improve interpolation image generation of a fractional pixel position, technology referred to as an adaptive interpolation filter (AIF) for adaptively controlling a filter coefficient according to a feature of an input video has been studied (for example, see Non Patent Document 1). The filter coefficient in the AIF is determined to minimize prediction error power (the sum of squares of prediction errors). The AIF sets a filter coefficient in units of frames. On the other hand, a region-based adaptive interpolation filter (RBAIF) in which the filter coefficient can be set for each local region within the frame in consideration of locality of an image and a plurality of filter coefficients are used within the frame has been studied.
Here, a filter coefficient calculation algorithm of the AIF will be described. A scheme of adaptively varying an IF coefficient has been proposed in Non Patent Document 1 and is referred to as a non-separable AIF. In this scheme, a filter coefficient is determined so that prediction error power is minimized in consideration of a two-dimensional IF (a total of 36 (= 6 × 6) filter coefficients). Although a higher encoding efficiency than when a one-dimensional 6-tap fixed IF for use in the standard H.264/AVC is used can be achieved, a proposal for reducing the calculation complexity due to very high calculation complexity in obtaining the filter coefficient has been introduced in Non Patent Document 2.
A technique introduced in Non Patent Literature 2 is referred to as a separable adaptive interpolation filter (SAIF), and uses a one-dimensional 6-tap IF without using the two-dimensional IF. As a procedure, first, horizontal pixels (a, b, and c in Fig. 1 of Non Patent Document 2) are interpolated. Integer precision pixels C 1 to C6 are used to determine the filter coefficient. The horizontal filter coefficient is analytically determined to minimize a prediction error power function E of Expression (1).

$$ E = \sum_{x,y} \left( S_{x,y} - \sum_{c_i} w_{c_i} \cdot P_{\tilde{x}+c_i,\tilde{y}} \right)^2 \qquad \cdots (1) $$

Here, S represents the original image, P represents a decoded reference image, and x and y represent positions of horizontal and vertical directions in the image. In addition, -x = x + MVx - FilterOffset ("-" is added above x), where MVx is a horizontal component of a previously obtained motion vector, and FilterOffset represents an offset for adjustment (a value obtained by dividing a tap length of the horizontal filter by 2). In the vertical direction, -y = y + MVy ("-" is added above y), where MVy represents a vertical component of a motion vector. $wc_i$ is a horizontal filter coefficient group $c_i$ ($0 \le c_i < 6$) to be obtained.

A minimization process is independently performed for each fractional pixel position of the horizontal direction. Specifically, it is necessary to obtain a solution of the following simultaneous equation.

$$\frac{\partial E}{\partial w_{\tilde{c}_i}} = 2 \sum_{x,y} P_{\tilde{x}+\tilde{c}_i,\tilde{y}} \left( \sum_{c_i} w_{c_i} \cdot P_{\tilde{x}+c_i,\tilde{y}} - S_{x,y} \right) = 0 \qquad \cdots (2)$$

The above expression can be rewritten as:

$$\sum_{c_i} w_{c_i} \left( \sum_{x,y} P_{\tilde{x}+\tilde{c}_i,\tilde{y}} \cdot P_{\tilde{x}+c_i,\tilde{y}} \right) = \sum_{x,y} P_{\tilde{x}+\tilde{c}_i,\tilde{y}} \cdot S_{x.y} \qquad \cdots (3)$$

As a result, linear equations whose number is the same as the number of filter coefficients for obtaining Expression (1) are obtained. As the solution of this simultaneous equation, three types of 6-tap filter coefficient groups are obtained and fractional pixels (a, b, and c in Fig. 1 of Non Patent Document 2) are interpolated using their filter coefficients.
After the pixel interpolation of the horizontal direction has been completed, an interpolation process of the vertical direction is executed. The filter coefficient of the vertical direction is determined by solving a linear problem as in the horizontal direction. Specifically, the filter coefficient of the vertical direction is analytically determined to minimize the prediction error power function E of Expression (4).

$$E = \sum_{x,y} \left( S_{x,y} - \sum_{c_j} w_{c_j} \cdot \hat{P}_{\tilde{x},\tilde{y}+c_j} \right)^2 \qquad \cdots (4)$$

Here, S represents the original image, ^P (^ appears above P) represents an image to be interpolated in the horizontal direction after decoding, and x and y represent positions of horizontal and vertical directions in the image. In addition, -x = 4·(x+MVx) ("-" is added above x), where MVx represents a horizontal component of a rounded motion vector. In the vertical direction, -y = x + MVy - FilterOffset ("-" is added above y), where MVy represents a vertical component of the motion vector, and FilterOffset represents an offset for adjustment (a value obtained by dividing a tap length of the vertical filter by 2). $wc_j$ represents a vertical filter coefficient group $c_j$ ($0 \le c_j < 6$) to be obtained.

$$\frac{\partial E}{\partial w_{\tilde{c}_j}} = 2 \sum_{x,y} \hat{P}_{\tilde{x},\tilde{y}+\tilde{c}_j} \left( \sum_{c_j} w_{c_j} \cdot \hat{P}_{\tilde{x},\tilde{y}+c_j} - S_{x,y} \right) = 0 \qquad \cdots (5)$$

$$\sum_{c_j} w_{c_j} \left( \sum_{x,y} \hat{P}_{\tilde{x},\tilde{y}+\tilde{c}_j} \cdot \hat{P}_{\tilde{x},\tilde{y}+c_j} \right) = \sum_{x,y} \hat{P}_{\tilde{x},\tilde{y}+\tilde{c}_j} \cdot S_{x,y} \qquad \cdots (6)$$

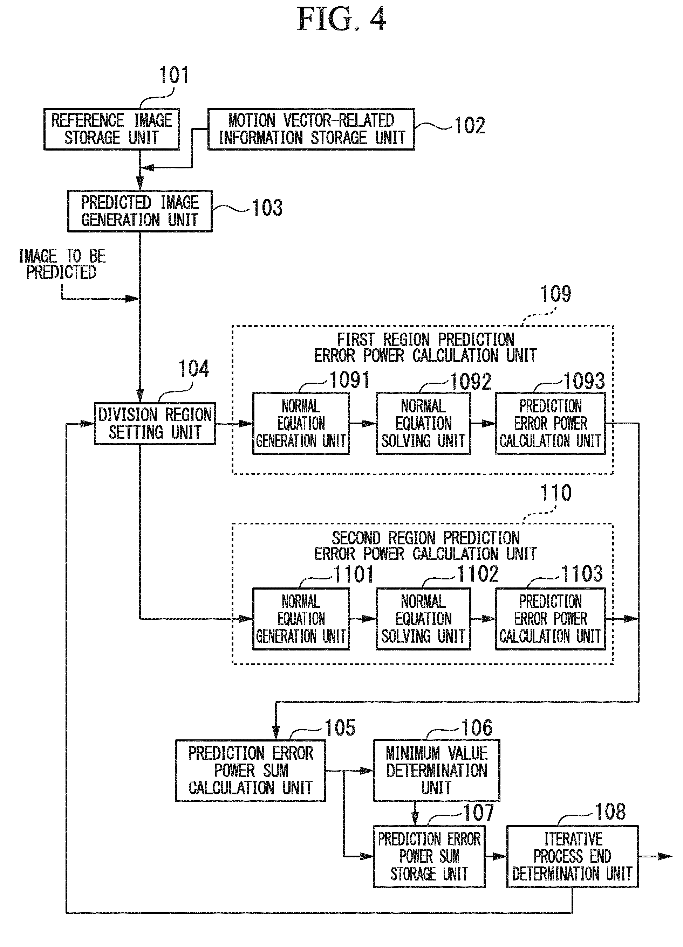

The minimization process is independently executed for every fractional precision pixel, and 12 types of 6-tap filters are obtained. Using the filter coefficient, the remaining fractional precision pixels (d to o in Fig. 1 of Non Patent Document 2) are interpolated. From the above, it is necessary to encode a total of 90 (= 6 × 15) filter coefficients and transmit the encoded coefficients to a decoding side.
Next, a configuration of the RBAIF according to the related art will be described with reference to Fig. 4. Fig. 4 is a block diagram illustrating the configuration of the RBAIF according to the related art. In Fig. 4, a reference image storage unit 101 stores a reference image for use in inter-frame prediction. A motion vector-related information storage unit 102 stores motion vector-related information for use in the inter-frame prediction for an input image and the reference image. A predicted image generation unit 103 reads the reference image read from the reference image storage unit 101 and the motion vector-related information read from the motion vector-related information storage unit 102 as the input, and generates a predicted image for the input image based on a motion-compensated inter-frame prediction process using the reference image and the motion vector-related information.

A division region setting unit 104 sets a division position at which a frame is divided based on the designated order from among candidates for the division position. A prediction error power sum calculation unit 105 calculates a value obtained by adding two as a prediction error power sum within the frame using two output prediction error powers as the input. A minimum value determination value 106 determines whether the prediction error power sum calculated by the prediction error power sum calculation unit 105 is less than a stored value, and stores the prediction error power sum calculated by the prediction error power sum calculation unit 105, position information representing a division potion, and filter coefficients for two division regions produced by a division process at the same division position when the sum is less than the stored value. A prediction error power sum storage unit 107 stores the prediction error power sum calculated by the prediction error power sum calculation unit 105, the position information representing a division potion, and the filter coefficients for the two division regions produced by the division process at the same division position. Until a process on all candidates for the division position is performed, an iterative process end determination unit 108 iterates the process.

A first region prediction error power calculation unit 109 includes a normal equation generation unit 1091, a normal equation solving unit 1092, and a prediction error power calculation unit 1093. The normal equation generation unit 1091 calculates a multiplication coefficient and a bias coefficient constituting a normal equation of a division region, and generates the normal equation for the division region. Here, the corresponding division region is a left region when a left/right division process is performed in the horizontal direction and is an upper region when an up/down division process is performed in the vertical direction. The normal equation solving unit 1092 obtains a solution of the normal equation generated by the normal equation generation unit 1091, and stores the solution as the IF coefficient. The prediction error power calculation unit 1093 calculates prediction error power when an IF coefficient calculated by the normal equation solving unit 1092 is used.

A second region prediction error power calculation unit 110 includes a normal equation generation unit 1101, a normal equation solving unit 1102, and a prediction error power calculation unit 1103. The normal equation generation unit 1101 calculates a multiplication coefficient and a bias coefficient constituting a normal equation of a division region, and generates the normal equation for the division region. Here, the corresponding division region is a right region when the left/right division process is performed in the horizontal direction and is a lower region when the up/down division process is performed in the vertical direction. The normal equation solving unit 1102 obtains a solution of the normal equation generated by the normal equation generation unit 1101 and stores the solution as the IF coefficient. The prediction error power calculation unit 1103 calculates prediction error power when an IF coefficient calculated by the normal equation solving unit 1102 is used.

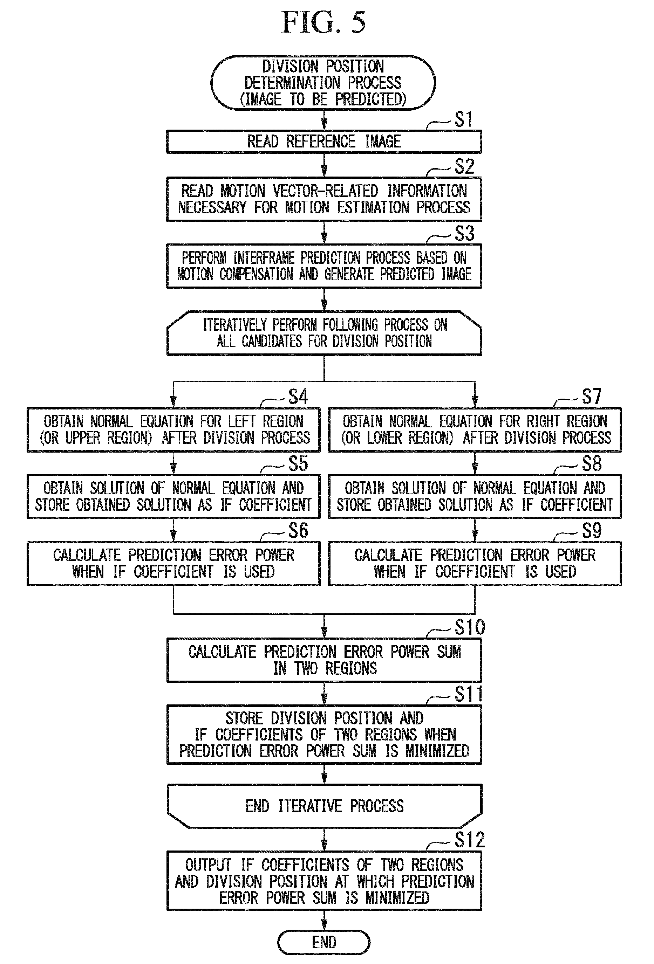

Next, an operation of the RBAIF according to the related art illustrated in Fig. 4 will be described with reference to Fig. 5. Fig. 5 is a flowchart illustrating the operation of the RBAIF illustrated in Fig. 4. First, the predicted image generation unit 103 reads a reference image for use in inter-frame prediction from the reference image storage unit 101 (step S1). Subsequently, the predicted image generation unit 103 reads motion vector-related information obtained as a result of performing a motion estimation process on an encoding target image using the reference image from the motion vector-related information storage unit 102 (step S2). Accordingly, based on the motion-compensated inter-frame prediction process, a predicted image for the input image is generated (step S3).

Next, the division region setting unit 104 sets a division region and outputs setting information to the two normal equation generation units 1091 and 1101. Upon receiving the setting information, the normal equation generation unit 1091 calculates a multiplication coefficient and a bias coefficient constituting the normal equation of the set division region, and generates and outputs the normal equation for the division region (step S4). Here, the corresponding division region is a left region when the left/right division process is performed in the horizontal direction and is an upper region when the up/down division process is performed in the vertical direction. Subsequently, the normal equation solving unit 1092 obtains a solution of the normal equation output from the normal equation generation unit 1091, and stores the solution as the IF coefficient (step S5).

The prediction error power calculation unit 1093 calculates and outputs prediction error power when such an IF coefficient is used (step S6).

On the other hand, the normal equation generation unit 1101 calculates a multiplication coefficient and a bias coefficient constituting a normal equation of a set division region and generates and outputs the normal equation for the division region (step S7). Here, the corresponding division region is a right region when the left/right division process is performed in the horizontal direction and is a lower region when the up/down division process is performed in the vertical direction. Subsequently, the normal equation solving unit 1102 obtains a solution of the normal equation output from the normal equation generation unit 1101, and stores the solution as the IF coefficient (step S8). The prediction error power calculation unit 1103 calculates and outputs prediction error power when such an IF coefficient is used (step S9).

Next, the prediction error power sum calculation unit 105 receives inputs of prediction error powers output from the two prediction error power calculation units 1093 and 1103, and calculates a sum of the two as a prediction error power sum within a frame to store the calculated sum in the prediction error power sum storage unit 107 (step S10). The minimum value determination unit 106 obtains a division position to which a minimum value is given among prediction error power sums stored in the prediction error power sum storage unit 107, and stores filter coefficients for two division regions produced by a division process at the same division position (step S11). The iterative process end determination unit 108 determines whether all candidates for the division position have been processed, and outputs an instruction for iterating the process to the division region setting unit 104 if the process on all the candidates has not ended. At a point in time at which the process on all the candidates has ended, the iterative process end determination unit 108 obtains a division position at which the prediction error power sum is minimized and outputs filter coefficients for two division regions produced by a division process at the same division position (step S12).

[Documents of the prior art]

[Patent Documents]

[Non-Patent Document]

[Non-Patent Document 1]
Y. Vatis, B. Edler, D. Nguyen, and J. Ostermann, "Two-dimensional non-separable adaptive wiener interpolation filter for H.264/AVC," in ITU-TQ.6/SG16 VCEG, VCEG-Z17r1, Apr. 2005.
[Non-Patent Document 2]
S. Wittmann and T. Wedi, "Separable adaptive interpolation filter for video coding," in IEEE International Conference on image Processing, pp. 2500 to 2503, 2008.

DISCLOSURE OF INVENTION

[Problems to be solved by the invention]

In the RBAIF, a square region ($\Delta \times \Delta$ pixels) referred to as a segmentation unit (SU) is specified as a minimum unit of a region division within a frame. The present invention targets at an RBAIF in which a region is divided using the above-described SU as the minimum unit and an optimum IF coefficient for each division region is set. In the case of a frame including $W \times H$ [pixels], ($WH/\Delta^2$) SUs are included. For example, there is a $W/\Delta$-division method including a non-division option when the frame is divided into two left and right divisions in the horizontal direction and there is an $H/\Delta$-division method including a non-division option when the same frame is divided into two up and down divisions in the vertical direction. Hereinafter, an SU for a region $\{x, y| n \cdot \Delta \leq x \leq (n + 1) \cdot \Delta - 1, m \cdot \Delta \leq y \leq (m + 1) \times \Delta - 1\}$ within the frame is assumed to be represented as $\psi(n, m)$. Here, it is assumed that x and y are variables representing a coordinate value within the frame and have values of x = 0, ..., W - 1 and y = 0, ..., H - 1, and n and m have values of n = 0, ..., $W/\Delta$ - 1 and m = 0, ..., $H/\Delta$ - 1.

As a norm of decision of a region division of the RBAIF, a sum of prediction error powers within the frame is used. When a filter coefficient $\eta$(px, py, lx, ly) has been used for a rectangular region identified by four coordinate values (px, py), (px + lx, py), (px, py + ly - 1), and (px + 1x - 1, py + ly - 1), prediction error power is assumed to be represented as E(px, py, lx, ly, $\eta$(px, py, lx, ly)).

In the following description, as an example, a frame may be divided into two left and right regions, and a filter coefficient may be assigned to each division region. In this case, as described above, there is a $W/\Delta$-division method including a non-division option. When the frame is divided into a left region of (x < n·$\Delta$) and a right region of (n·$\Delta \leq$ x) (n = 0, ..., $W/\Delta$ - 1), filter coefficients $\eta$(0, 0, n·$\Delta$, H) and $\eta$(n$\Delta$, 0, W - n·$\Delta$, H) of the RBAIF are first obtained. Next, a sum of prediction error powers of the two regions is obtained using the obtained filter coefficients.

$$E (0, 0, n \cdot \Delta, H, \eta (0, 0, n \cdot \Delta, H)) + E (n \cdot \Delta, 0, W - n \cdot \Delta, H, \eta (n \cdot \Delta, 0, W - n \cdot \Delta, H))$$

The above-described process is performed for all candidates n = 0, ..., $W/\Delta$ - 1 for a division position, and a division position at which a sum of prediction error powers is minimized is obtained.

$$n_{opt} = \arg \min_{n=0,\ldots,\frac{W}{\Delta}-1} \{ E(0,0,n \cdot \Delta, H, \boldsymbol{\eta}(0,0,n \cdot \Delta, H)) + E(n \cdot \Delta, 0, W - n \cdot \Delta, H, \boldsymbol{\eta}(n \cdot \Delta, 0, W - n \cdot \Delta, H)) \}$$

Ultimately, a process of dividing a region into a left region of ($x < n_{opt} \cdot \Delta$) and a right region of ($n_{opt} \cdot \Delta \le x$) is assumed to be an optimum region division process. When a size of the SU is fixed, a size of the frame is increased and the number of candidates $W/\Delta$ for the division position is increased. For example, when $\Delta = 32$, the number of candidates for a region division is 11 for a video of 352 × 288 [pixels/frame], and the number of candidates for a region division is 120 for a high-definition video of 3840 × 2160 [pixels/frame]. In this case, there is a problem in that a calculation amount for setting an optimum region division is increased. If the SU size $\Delta$ is set to a large value for a high-definition video, an increase in the above-described calculation amount is prevented, but the precision of the region division process is likely to be degraded and sufficient prediction performance is likely not to be obtained.

The present invention has been made in view of such circumstances, and an object of the invention is to provide a video encoding device, a video encoding method, and a video encoding program having an RBAIF function capable of reducing a calculation amount necessary to select an optimum region division while retaining prediction performance of the RBAIF.

[Means for solving the problem]

According to the present invention, there is provided a video encoding device which performs motion-compensated inter-frame prediction corresponding to fractional pixel precision using an RBAIF in which a frame is divided into regions and an IF coefficient is adaptively set for each division region as an IF that generates an interpolation pixel value of a fractional pixel position, the video encoding device including: an equation generation means which constructs a linear simultaneous equation for obtaining an IF coefficient for a division region prescribed by a division position when an optimum division position is selected from among candidates for a prepared division position; and an equation solving means which obtains the IF coefficient by solving the linear simultaneous equation, wherein the equation generation means diverts a redundant arithmetic processing result in an arithmetic operation of calculating the IF coefficient in a different division region and generates an equation in which only non-redundant difference information is newly calculated using the arithmetic operation.

In the video encoding device according to the present invention, when the difference information is calculated, necessary information may be pre-calculated in each minimum unit of the region division, and necessary difference information may be calculated using the pre-calculated information as necessary.

A video decoding device according to the present invention may decode a video encoded by the video encoding device.

According to the present invention, there is provided a video encoding method for use in a video encoding device which performs motion-compensated inter-frame prediction corresponding to fractional pixel precision using an RBAIF in which a frame is divided into regions and an IF coefficient is adaptively set for each division region as an IF that generates an interpolation pixel value of a fractional pixel position, the video encoding method including: an equation generation step of constructing a linear simultaneous equation for obtaining an IF coefficient for a division region prescribed by a division position when an optimum division position is selected from among candidates for a prepared division position; and an equation solving step of obtaining the IF coefficient by solving the linear simultaneous equation, wherein the equation generation step includes diverting a redundant arithmetic processing result in an arithmetic operation of calculating the IF coefficient in a different division region and generating an equation in which only non-redundant difference information is newly calculated using the arithmetic operation.

In the video encoding method according to the present invention, when the difference information is calculated, necessary information may be pre-calculated in each minimum unit of the region division, and necessary difference information may be calculated using the pre-calculated information as necessary.

A video decoding method according to the present invention may include decoding a video encoded by the video encoding method.

According to the present invention, there is provided a video encoding program for causing a computer on a video encoding device, which performs motion-compensated inter-frame prediction corresponding to fractional pixel precision using an RBAIF in which a frame is divided into regions and an IF coefficient is adaptively set for each division region as an IF that generates an interpolation pixel value of a fractional pixel position, to perform an encoding process including: an equation generation step of constructing a linear simultaneous equation for obtaining an IF coefficient for a division region prescribed by a division position when an optimum division position is selected from among candidates for a prepared division position; and an equation solving step of obtaining the IF coefficient by solving the linear simultaneous equation, wherein the equation generation step includes diverting a redundant arithmetic processing result in an arithmetic operation of calculating the IF coefficient in a different division region and generating an equation in which only non-redundant difference information is newly calculated using the arithmetic operation.

A video decoding program according to the present invention may include decoding a video encoded by the video encoding program.

[Effects of the Invention]

According to the present invention, there is an advantageous effect in that it is possible to omit a redundant process and reduce a calculation amount without degrading prediction performance when filter coefficients are calculated for different division shapes in a filter calculation process of an RBAIF associated with calculation of an optimum division position.

BRIEF DESCRIPTION OF THE DRAWINGS

Fig. 1 is a block diagram illustrating a configuration of an embodiment of the present invention.
Fig. 2 is a flowchart illustrating an operation of a device illustrated in Fig. 1.
Fig. 3 is a block diagram illustrating a configuration of a video transmission system including a video encoding device having an RBAIF illustrated in Fig. 1.
Fig. 4 is a block diagram illustrating a configuration of a device according to the related art.
Fig. 5 is a flowchart illustrating an operation of the device illustrated in Fig. 4.

EMBODIMENTS FOR CARRYING OUT THE INVENTION

Hereinafter, an RBAIF for use in a video encoding device according to an embodiment of the present invention will be described with reference to the drawings. Before a detailed description of the RBAIF, the operation principle of the RBAIF for use in the video encoding device according to the embodiment of the present invention will be described. The present invention reduces a calculation amount without degrading prediction performance by omitting the calculation of a redundant process in consideration of the fact that the redundant process is included in a method of calculating a filter coefficient for a different division shape of the RBAIF.

In the present invention, all information (a size of a block for performing prediction, a motion vector, a reference image of motion compensation, and the like) associated with inter-frame prediction is assumed to be shared regardless of a shape of a region division. Also, information associated with the above-described inter-frame prediction is referred to as motion vector-related information. For the motion vector-related information, obtained information is assumed to be separately given. For example, a pixel value of a fractional pixel position can be interpolated using an IF of a fixed coefficient prescribed in the standard H.264/AVC and the motion vector-related information can be obtained using a motion estimation algorithm (for example, Literature "K. P. Lim, G. Sullivan, and T. Wiegand, 'Text description of joint model reference encoding methods and decoding concealment methods,' Technical Report R095, Joint Video Team (JVT) of ISO/IEC MPEG and ITU-T VCEG, Jan. 2006").

In the following description, an example in which the frame is divided into two regions and the filter coefficient is derived for each division region will be described. The motion vector-related information is read and a filter coefficient for minimizing prediction error power within each division region is calculated for each candidate position of a region division. In the filter coefficient calculation of the RBAIF, normal equations shown in Expressions (3) and (6) are solved for each division region and the filter coefficient is calculated as the solution.

Expressions (3) and (6) are modified as follows.

$$\sum_{c_i} w_{c_i} \left( \sum_{n=0}^{\frac{W}{\Delta}-1} \sum_{m=0}^{\frac{H}{\Delta}-1} \sum_{(x,y)\in\Psi(n,m)} P_{\tilde{x}+\tilde{c}_i,\tilde{y}} \cdot P_{\tilde{x}+c_i,\tilde{y}} \right) = \sum_{n=0}^{\frac{W}{\Delta}-1} \sum_{m=0}^{\frac{H}{\Delta}-1} \sum_{(x,y)\in\Psi(n,m)} P_{\tilde{x}+\tilde{c}_i,\tilde{y}} \cdot S_{x,y}$$

$$\sum_{c_j} w_{c_j} \left( \sum_{n=0}^{\frac{W}{\Delta}-1} \sum_{m=0}^{\frac{H}{\Delta}-1} \sum_{(x,y)\in\Psi(n,m)} \hat{P}_{\tilde{x},\tilde{y}+\tilde{c}_j} \cdot \hat{P}_{\tilde{x},\tilde{y}+c_j} \right) = \sum_{n=0}^{\frac{W}{\Delta}-1} \sum_{m=0}^{\frac{H}{\Delta}-1} \sum_{(x,y)\in\Psi(n,m)} \hat{P}_{\tilde{x},\tilde{y}+\tilde{c}_j} \cdot S_{x,y}$$

$$\begin{cases} \alpha_v(n,m,c_i) = \sum_{(x,y)\in\Psi(n,m)} P_{\tilde{x}+\tilde{c}_i,\tilde{y}} \cdot P_{\tilde{x}+c_i,\tilde{y}} \\[2mm] \beta_v(n,m) = \sum_{(x,y)\in\Psi(n,m)} P_{\tilde{x}+\tilde{c}_i,\tilde{y}} \cdot S_{x,y} \\[2mm] \alpha_h(n,m,c_j) = \sum_{(x,y)\in\Psi(n,m)} \hat{P}_{\tilde{x},\tilde{y}+\tilde{c}_j} \cdot \hat{P}_{\tilde{x},\tilde{y}+c_j} \\[2mm] \beta_h(n,m) = \sum_{(x,y)\in\Psi(n,m)} \hat{P}_{\tilde{x},\tilde{y}+\tilde{c}_j} \cdot S_{x,y} \end{cases}$$

$$\cdots (7)$$

Here, when Expressions (7) are set, Expressions (3) and (6) can be concisely represented as follows.

$$\sum_{c_i} w_{c_i} \left( \sum_{n=0}^{\frac{W}{\Delta}-1} \sum_{m=0}^{\frac{H}{\Delta}-1} \alpha_v(n,m,c_i) \right) = \sum_{n=0}^{\frac{W}{\Delta}-1} \sum_{m=0}^{\frac{H}{\Delta}-1} \beta_v(n,m) \qquad \cdots (8)$$

$$\sum_{c_j} w_{c_j} \left( \sum_{n=0}^{\frac{W}{\Delta}-1} \sum_{m=0}^{\frac{H}{\Delta}-1} \alpha_h(n,m,c_j) \right) = \sum_{n=0}^{\frac{W}{\Delta}-1} \sum_{m=0}^{\frac{H}{\Delta}-1} \beta_h(n,m) \qquad \cdots (9)$$

Hereinafter, $\alpha v(n, m, c_i)$ and $\alpha h(n, m, c_i)$ are referred to as SU auto-correlation functions, and $\beta v(n, m)$ and $\beta h(n, m)$ are referred to as SU cross-correlation functions.

When the frame is divided into a left region ($x < kx \cdot \Delta$) and a right region ($kx \cdot \Delta \leq x$) ($kx = 0, ..., W/\Delta - 1$) as two left and right regions, the filter coefficient $\eta(0, 0, kx \cdot \Delta, H)$ of the RBAIF of the left region serves as the solution of the following linear simultaneous equations.

$$\sum_{c_i} w_{c_i} \left( \sum_{n=0}^{k_x-1} \sum_{m=0}^{\frac{H}{\Delta}-1} \alpha_v(n,m,c_i) \right) = \sum_{n=0}^{k_x-1} \sum_{m=0}^{\frac{H}{\Delta}-1} \beta_v(n,m) \qquad \cdots (10)$$

$$\sum_{c_j} w_{c_j} \left( \sum_{n=0}^{k_x-1} \sum_{m=0}^{\frac{H}{\Delta}-1} \alpha_h(n,m,c_j) \right) = \sum_{n=0}^{k_x-1} \sum_{m=0}^{\frac{H}{\Delta}-1} \beta_h(n,m) \qquad \cdots (11)$$

In addition, the filter coefficient $\eta(kx \cdot \Delta, 0, W - kx \cdot \Delta, H)$ of the RBAIF of the right region serves as the solution of the following linear simultaneous equations.

8

$$\sum_{c_i} w_{c_i}\left(\sum_{n=k_x}^{\frac{W}{\Delta}-1}\sum_{m=0}^{\frac{H}{\Delta}-1}\alpha_v(n,m,c_i)\right) = \sum_{n=k_x}^{\frac{W}{\Delta}-1}\sum_{m=0}^{\frac{H}{\Delta}-1}\beta_v(n,m) \qquad \cdots \ (1\,2)$$

$$\sum_{c_j} w_{c_j}\left(\sum_{n=k_x}^{\frac{W}{\Delta}-1}\sum_{m=0}^{\frac{H}{\Delta}-1}\alpha_h(n,m,c_j)\right) = \sum_{n=k_x}^{\frac{W}{\Delta}-1}\sum_{m=0}^{\frac{H}{\Delta}-1}\beta_h(n,m) \qquad \cdots \ (1\,3)$$

$$\begin{cases} A_v\big(n_{\min},n_{\max},m_{\min},m_{\max},c_i\big) = \sum_{n=n_{\min}}^{n_{\max}}\sum_{m=m_{\min}}^{m_{\max}}\alpha_v\big(n,m,c_i\big) \\ B_v\big(n_{\min},n_{\max},m_{\min},m_{\max}\big) = \sum_{n=n_{\min}}^{n_{\max}}\sum_{m=m_{\min}}^{m_{\max}}\beta_v\big(n,m\big) \\ A_h\big(n_{\min},n_{\max},m_{\min},m_{\max},c_i\big) = \sum_{n=n_{\min}}^{n_{\max}}\sum_{m=m_{\min}}^{m_{\max}}\alpha_h\big(n,m,c_i\big) \\ B_h\big(n_{\min},n_{\max},m_{\min},m_{\max}\big) = \sum_{n=n_{\min}}^{n_{\max}}\sum_{m=m_{\min}}^{m_{\max}}\beta_h\big(n,m\big) \end{cases}$$

$$\cdots \ (1\,4)$$

Further, when Expressions (14) are set, linear simultaneous equations for obtaining the filter coefficient η(0, 0, kx·Δ, H) of the RBAIF of the left region become the following expressions.

$$\sum_{c_i} w_{c_i}\left(A_v(0,k_x-1,0,\frac{H}{\Delta}-1,c_i)\right) = B_v(0,k_x-1,0,\frac{H}{\Delta}-1) \qquad \cdots \ (1\,5)$$

$$\sum_{c_j} w_{c_j}\left(A_h(0,k_x-1,0,\frac{H}{\Delta}-1,c_j)\right) = B_h(0,k_x-1,0,\frac{H}{\Delta}-1) \qquad \cdots \ (1\,6)$$

In addition, linear simultaneous equations for obtaining a filter coefficient η(kx·Δ, 0, W - kx·Δ, H) of the RBAIF of the right region become the following expressions.

$$\sum_{c_i} w_{c_i}\left(A_v(k_x,\frac{W}{\Delta}-1,0,\frac{H}{\Delta}-1,c_i)\right) = B_v(k_x,\frac{W}{\Delta}-1,0,\frac{H}{\Delta}-1) \qquad \cdots \ (1\,7)$$

$$\sum_{c_j} w_{c_j}\left(A_h(k_x,\frac{W}{\Delta}-1,0,\frac{H}{\Delta}-1,c_j)\right) = B_h(k_x,\frac{W}{\Delta}-1,0,\frac{H}{\Delta}-1) \qquad \cdots \ (1\,8)$$

The above-described linear simultaneous equation is referred to as a normal equation. Further, the right term of the normal equation is referred to as a bias coefficient. Values by which $wc_i$ and $wc_j$ of the left terms are multiplied are referred to as multiplication coefficients.

Next, when the frame is divided into a left region (x < (kx + 1)·Δ) and a right region ((kx + 1)·Δ ≤ x) as two left and right regions, the filter coefficient η(0, 0, (kx+ 1)·Δ, H) of the RBAIF of the left region serves as the solution of the following linear simultaneous equations.

$$\sum_{c_i} w_{c_i} \left( A_v(0, k_x - 1, 0, \frac{H}{\Delta} - 1, c_i) + \sum_{m=0}^{\frac{H}{\Delta}-1} \alpha_v(k_x, m, c_i) \right) = B_v(0, k_x - 1, 0, \frac{H}{\Delta} - 1) + \sum_{m=0}^{\frac{H}{\Delta}-1} \beta_v(k_x, m) \qquad \cdots (19)$$

$$\sum_{c_j} w_{c_j} \left( A_h(0, k_x - 1, 0, \frac{H}{\Delta} - 1, c_j) + \sum_{m=0}^{\frac{H}{\Delta}-1} \alpha_h(k_x, m, c_j) \right) = B_h(0, k_x - 1, 0, \frac{H}{\Delta} - 1) + \sum_{m=0}^{\frac{H}{\Delta}-1} \beta_h(k_x, m) \qquad \cdots (20)$$

In addition, a filter coefficient η(kx·Δ, 0, W - (kx + 1)·Δ, H) of the RBAIF of the right region serves as the solution of the following linear simultaneous equations.

$$\sum_{c_i} w_{c_i} \left( A_v(k_x, \frac{W}{\Delta} - 1, 0, \frac{H}{\Delta} - 1, c_i) - \sum_{m=0}^{\frac{H}{\Delta}-1} \alpha_v(k_x, m, c_i) \right) = B_v(k_x, \frac{W}{\Delta} - 1, 0, \frac{H}{\Delta} - 1) - \sum_{m=0}^{\frac{H}{\Delta}-1} \beta_v(k_x, m) \qquad \cdots (21)$$

$$\sum_{c_j} w_{c_j} \left( A_h(k_x, \frac{W}{\Delta} - 1, 0, \frac{H}{\Delta} - 1, c_j) - \sum_{m=0}^{\frac{H}{\Delta}-1} \alpha_h(k_x, m, c_j) \right) = B_h(k_x, \frac{W}{\Delta} - 1, 0, \frac{H}{\Delta} - 1) - \sum_{m=0}^{\frac{H}{\Delta}-1} \beta_h(k_x, m) \qquad \cdots (22)$$

Focusing on a relationship between Expressions (15) and (19), redundant calculations can be omitted by storing results of Av(0, kx - 1, 0, H/Δ - 1, $c_i$) and Bv(0, kx - 1, 0, H/Δ - 1) obtained in a calculation process of Expression (15) and reading the stored results as necessary in a calculation process of Expression (19).

There is such a redundant calculation in a relationship between Expressions (16) and (20), a relationship between Expressions (17) and (21), and a relationship between Expressions (18) and (22), therefore the redundant calculation can be omitted.

Further, by storing a value obtained in a process of calculating Expression (19) as described above, it is also possible to similarly omit the redundant calculation even when the filter coefficient is calculated when the frame is divided into a left region (x < (kx + 2)·Δ) and a right region ((kx + 2)·Δ ≤ x) as two left and right regions.

$$A_v(0, k_x, 0, \frac{H}{\Delta} - 1, c_i) = A_v(0, k_x - 1, 0, \frac{H}{\Delta} - 1, c_i) + \sum_{m=0}^{\frac{H}{\Delta}-1} \alpha_v(k_x, m, c_i)$$

$$B_v(0, k_x + 1, 0, \frac{H}{\Delta} - 1) = B_v(0, k_x, 0, \frac{H}{\Delta} - 1) + \sum_{m=0}^{\frac{H}{\Delta}-1} \beta_v(k_x, m)$$

Expression (20) is also similar to the following expressions.

$$A_h\left(0, k_x, 0, \frac{H}{\Delta} - 1, c_i\right) = A_h\left(0, k_x - 1, 0, \frac{H}{\Delta} - 1, c_i\right) + \sum_{m=0}^{\frac{H}{\Delta}-1} \alpha_h(k_x, m, c_i)$$

$$B_h\left(0, k_x + 1, 0, \frac{H}{\Delta} - 1\right) = B_h\left(0, k_x, 0, \frac{H}{\Delta} - 1\right) + \sum_{m=0}^{\frac{H}{\Delta}-1} \beta_h(k_x, m)$$

In addition, the above description corresponds to the case of the left region, but by storing a value obtained in a process of calculating Expression (21) for the case of the right region, it is also possible to similarly omit the redundant calculation even when the filter coefficient is calculated when the frame is divided into a left region (x < (kx + 2)·Δ) and a right region ((kx + 2)·Δ ≤ x) as two left and right regions.

$$A_v\left(k_x + 1, \frac{W}{\Delta} - 1, 0, \frac{H}{\Delta} - 1, c_i\right) = A_v\left(k_x, \frac{W}{\Delta} - 1, 0, \frac{H}{\Delta} - 1, c_i\right) - \sum_{m=0}^{\frac{H}{\Delta}-1} \alpha_v(k_x, m, c_i)$$

$$B_v\left(k_x + 1, \frac{W}{\Delta} - 1, 0, \frac{H}{\Delta} - 1\right) = B_v\left(k_x, \frac{W}{\Delta} - 1, 0, \frac{H}{\Delta} - 1\right) - \sum_{m=0}^{\frac{H}{\Delta}-1} \beta_v(k_x, m)$$

Expression (22) is also similar to the following expressions.

$$A_h\left(k_x + 1, \frac{W}{\Delta} - 1, 0, \frac{H}{\Delta} - 1, c_i\right) = A_h\left(k_x, \frac{W}{\Delta} - 1, 0, \frac{H}{\Delta} - 1, c_i\right) - \sum_{m=0}^{\frac{H}{\Delta}-1} \alpha_h(k_x, m, c_i)$$

$$B_h\left(k_x + 1, \frac{W}{\Delta} - 1, 0, \frac{H}{\Delta} - 1\right) = B_h\left(k_x, \frac{W}{\Delta} - 1, 0, \frac{H}{\Delta} - 1\right) - \sum_{m=0}^{\frac{H}{\Delta}-1} \beta_h(k_x, m)$$

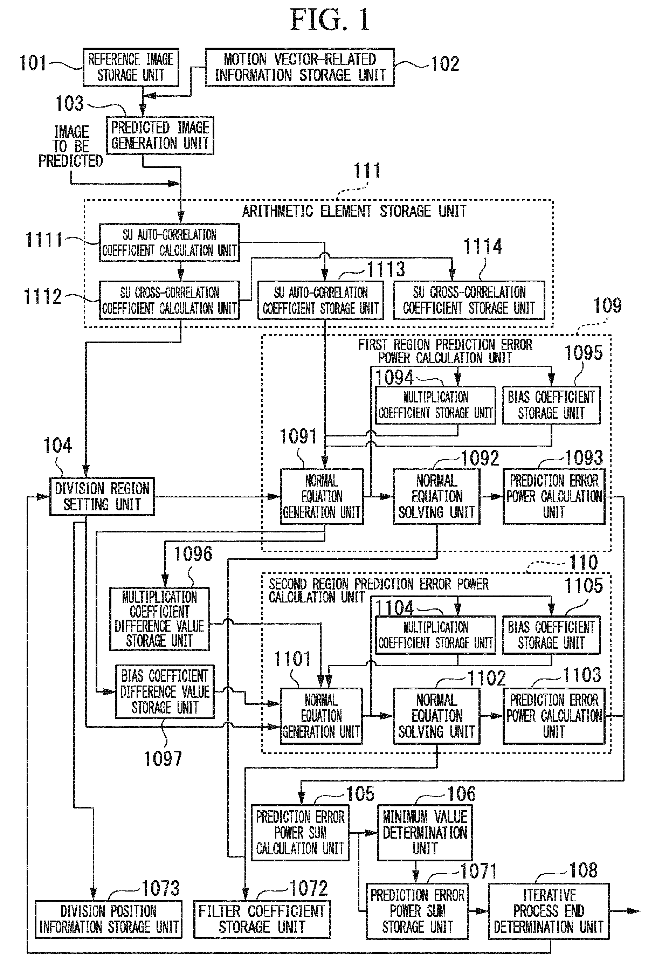

Next, a configuration of the RBAIF according to an embodiment of the present invention will be described with reference to Fig. 1. Fig. 1 is a block diagram illustrating the configuration of the same embodiment. The same parts as those of the RBAIF of the related art illustrated in Fig. 4 are assigned the same reference signs in Fig. 1, and description thereof is omitted. The RBAIF illustrated in Fig. 1 is different from the RBAIF of the related art in that multiplication coefficient storage units 1094 and 1104 and bias coefficient storage units 1095 and 1105 are newly provided within the first region prediction error power calculation unit 109 and the second region prediction error power calculation unit 110 and an arithmetic element storage unit 111 is newly provided.

An SU auto-correlation calculation unit 1111 reads a predicted image as the input, calculates SU auto-correlation coefficients for all SUs within the frame, and stores calculation results in an SU auto-correlation coefficient storage unit 1113. An SU cross-correlation coefficient calculation unit 1112 reads an encoding target image and a predicted image as the input, calculates SU cross-correlation coefficients for all SUs within the frame, and stores calculation results in an SU cross-correlation coefficient storage unit 1114.

A normal equation generation unit 1091 reads a multiplication coefficient from the multiplication coefficient storage unit 1094, calculates a difference value between the same coefficient and a multiplication coefficient necessary to construct a normal equation, adds the stored multiplication coefficient to the difference value, and outputs an addition result as the multiplication coefficient necessary to construct the normal equation. For calculation of the difference value, the SU auto-correlation coefficient and the SU cross-correlation coefficient stored in the SU auto-correlation coefficient storage unit 1113 and the SU cross-correlation coefficient storage unit 1114 are read and the difference value is set based on the addition of the SU auto-correlation coefficient and the SU cross-correlation coefficient. The difference value obtained here is stored in a multiplication coefficient difference value storage unit 1096 so that the difference value is reused in a subsequent process.

In addition, the normal equation generation unit 1091 reads a bias coefficient from the bias coefficient storage unit 1095, calculates a difference value between the same coefficient and a bias coefficient necessary to construct a normal equation, adds the stored bias coefficient to the difference value, and outputs an addition result as the bias coefficient necessary to construct the normal equation. For calculation of the difference value, the SU auto-correlation coefficient and the SU cross-correlation coefficient stored in the SU auto-correlation coefficient storage unit 1113 and the SU cross-correlation coefficient storage unit 1114 are read and the difference value is set based on the addition of the SU auto-correlation coefficient and the SU cross-correlation coefficient. The difference value obtained here is stored in a bias coefficient difference value storage unit 1097 so that the difference value is reused in a subsequent process.

The normal equation generation unit 1091 reads the multiplication coefficient and the bias coefficient calculated in this process, and generates a normal equation for a division region. Here, the corresponding division region is the left region when the left/right division process is performed in the horizontal direction and is the upper region when the up/down division process is performed in the vertical direction. The calculated multiplication coefficient and bias coefficient are stored in the multiplication coefficient storage unit 1094 and the bias coefficient storage unit 1095, respectively. The normal equation solving unit 1092 obtains the solution of the normal equation generated by the normal equation generation unit 1091, and stores the solution as an IF coefficient. The prediction error power calculation unit 1093 reads an encoding target image, a reference image, motion vector-related information, and an IF coefficient calculated by the normal equation solving unit 1092, and calculates prediction error power using the same IF coefficient.

The normal equation generation unit 1101 reads a multiplication coefficient from the multiplication coefficient storage unit 1104, further reads the difference value of the multiplication coefficient from the multiplication coefficient difference value storage unit 1096, subtracts the latter from the former, and outputs a subtraction result as a multiplication coefficient necessary to construct the normal equation. In addition, the normal equation generation unit 1101 reads a bias coefficient from the bias coefficient storage unit 1105, further reads the difference value of the bias coefficient from the bias coefficient difference value storage unit 1097, subtracts the latter from the former, and outputs a subtraction result as a bias coefficient necessary to construct the normal equation. The multiplication coefficient and the bias coefficient calculated in this process are read and the normal equation for the division region is generated. Here, the corresponding division region is the right region when the left/right division process is performed in the horizontal direction and is the lower region when the up/down division process is performed in the vertical direction.

The calculated multiplication coefficient and bias coefficient are stored in the multiplication coefficient storage unit 1104 and the bias coefficient storage unit 1105, respectively. The normal equation solving unit 1102 obtains the solution of the normal equation generated by the normal equation generation unit 1101 and stores the solution as an IF coefficient. The prediction error power calculation unit 1103 reads an encoding target image, a reference image, motion vector-related information, and an IF coefficient calculated by the normal equation solving unit 1102, and calculates prediction error power when the same IF coefficient is used.

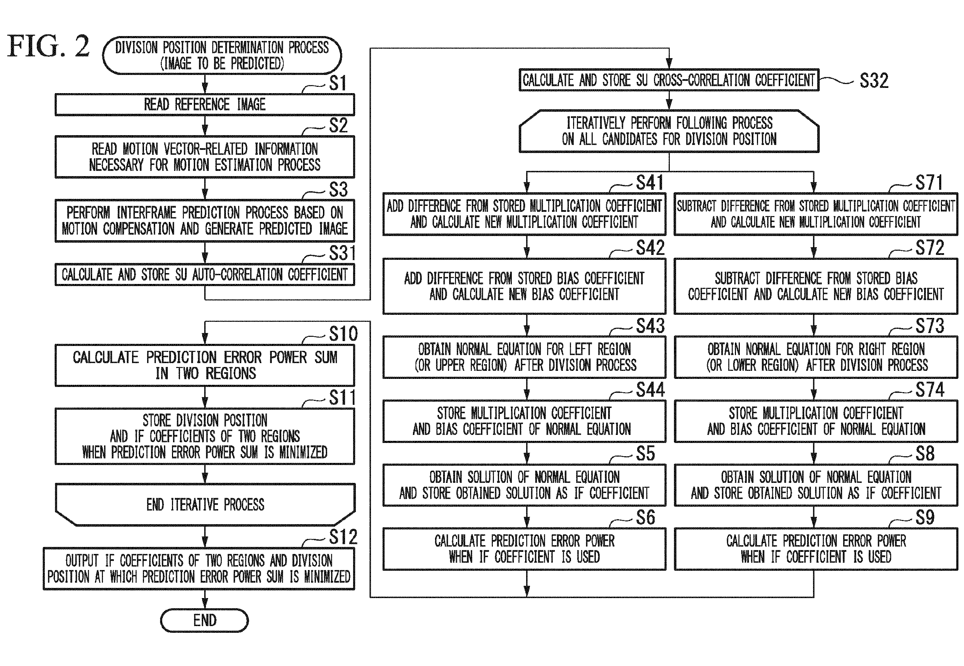

Next, a processing operation of the RBAIF illustrated in Fig. 1 will be described with reference to Fig. 2. Fig. 2 is a flowchart illustrating the processing operation of the RBAIF illustrated in Fig. 1. First, the predicted image generation unit 103 reads a reference image to be used in inter-frame prediction from the reference image storage unit 101 (step S1). Subsequently, the predicted image generation unit 103 reads motion vector-related information obtained as a result of performing a motion estimation process using the reference image from the motion vector-related information storage unit 102 for an encoding target image (step S2). Based on a motion-compensated inter-frame prediction process, a predicted image for the input image is generated (step S3).

Next, the SU auto-correlation coefficient calculation unit 1111 reads the generated predicted image as the input, calculates SU auto-correlation coefficients based on definitions of $\alpha v(n, m, c_i)$ and $\alpha h(n, m, c_i)$ of Expression (7) for all SUs within a frame, and stores calculation results (step S31). Subsequently, the SU cross-correlation coefficient calculation unit 1112 reads an encoding target image and a predicted image as the input, calculates SU cross-correlation coefficients based on $\beta v(n, m)$ and $\beta h(n, m)$ of Expression (7) for all the SUs within the frame, and stores calculation results (step S32).

Next, the division region setting unit 104 sets a division region, outputs setting information to the normal equation generation unit 1091, and stores the setting information in the division position information storage unit 1073. The division method may include a method of dividing a frame into two regions of an upper region and a lower region in a horizontal division process or dividing a frame into two regions of a left region and a right region in a vertical division process. At this time, information representing a division position is assumed to be separately given. In addition, although a procedure of optimizing a filter coefficient is shown by targeting a separable filter hereinafter, the procedure is also similarly performed for a non-separable filter. Hereinafter, IF coefficients are derived in the order of the IF coefficient of the horizontal direction and the IF coefficient of the vertical direction. Of course, the derivation order can be reversed.

Next, the normal equation generation unit 1091 reads a multiplication coefficient (Av(0, kx - 1, 0, H/$\Delta$ - 1, $c_i$) and Ah(0, kx - 1, 0, H/$\Delta$ - 1, $c_j$) in Expressions (19) and (20)) stored in the multiplication coefficient storage unit 1094, calculates a difference value (included in Expressions (19) and (20)):

$$\sum\nolimits_{m=0}^{\frac{H}{\Delta}-1} \alpha_v(k_x, m, c_i), \quad \sum\nolimits_{m=0}^{\frac{H}{\Delta}-1} \alpha_h(k_x, m, c_j) \; )$$

between the same coefficient and a multiplication coefficient necessary to construct a normal equation, adds the stored multiplication coefficient to the difference value, and outputs an addition result as the multiplication coefficient necessary to construct the normal equation (step S41).

For calculation of the difference value, the SU auto-correlation coefficient and the SU cross-correlation coefficient stored in the SU auto-correlation coefficient storage unit 1113 and the SU cross-correlation coefficient storage unit 1114 are read and the difference value is set based on the addition of the SU auto-correlation coefficient and the SU cross-correlation coefficient. The difference value obtained here is stored in a multiplication coefficient difference value storage unit 1096 so that the difference value can be reused in a subsequent process.

Next, the normal equation generation unit 1091 reads a bias coefficient (Bv(0, kx - 1, 0, H/$\Delta$ - 1) and Bh(0, kx - 1, 0, H/$\Delta$ - 1) in Expressions (19) and (20)) stored in the bias coefficient storage unit 1095, calculates a difference value (included in Expressions (19) and (20)):

$$\sum\nolimits_{m=0}^{\frac{H}{\Delta}-1} \beta_v(k_x, m), \quad \sum\nolimits_{m=0}^{\frac{H}{\Delta}-1} \beta_h(k_x, m) \; )$$

between the same coefficient and a bias coefficient necessary to construct a normal equation, adds the stored bias coefficient to the difference value, and outputs an addition result as the bias coefficient necessary to construct the normal equation (step S42). For calculation of the difference value, the SU auto-correlation coefficient and the SU cross-correlation coefficient stored in the SU auto-correlation coefficient storage unit 1113 and the SU cross-correlation coefficient storage unit 1114 are read and the difference value is set based on the addition of the SU auto-correlation coefficient and the SU cross-correlation coefficient. The difference value obtained here is stored in a bias coefficient difference value storage unit 1097 so that the difference value can be reused in a subsequent process.

Next, the normal equation generation unit 1091 reads the calculated multiplication coefficient and bias coefficient, and generates Expressions (19) and (20) as a normal equation for a division region (step S43). Here, the corresponding division region is the left region when the left/right division process is performed in the horizontal direction and is the upper region when the up/down division process is performed in the vertical direction. The normal equation generation unit 1091 stores the calculated multiplication coefficient and bias coefficient in the multiplication coefficient storage unit 1094 and the bias coefficient storage unit 1095, respectively (step S44).

Next, the normal equation solving unit 1092 obtains the solution of the normal equation generated by the normal equation generation unit 1091, and stores the solution as an IF coefficient in the filter coefficient storage unit 1072 (step S5). Subsequently, the prediction error power calculation unit 1093 calculates prediction error power when the IF coefficient calculated in the normal equation solving unit 1092 is used (step S6).

Next, the normal equation generation unit 1101 reads a multiplication coefficient stored in the multiplication coefficient storage unit 1104 and the difference value stored in the multiplication coefficient difference value storage unit 1096, subtracts the difference value from the stored multiplication coefficient (Av(kx, W/$\Delta$ - 1, 0, H/$\Delta$ - 1, $c_i$) and Ah(kx, W/$\Delta$ - 1, 0, H/$\Delta$ - 1, $c_j$) in Expressions (21) and (22)), and outputs a subtraction result as a multiplication coefficient necessary to construct the normal equation (step S71).

Next, the normal equation generation unit 1101 reads a bias coefficient stored in the bias coefficient storage unit 1105 and the difference value stored in the bias coefficient difference value storage unit 1097, subtracts the difference value from the stored bias coefficient (Bv(kx, W/$\Delta$ - 1, 0, H/$\Delta$ - 1) and Bh(kx, W/$\Delta$ - 1, 0, H/$\Delta$ - 1) in Expressions (21) and (22)), and outputs a subtraction result as a bias coefficient necessary to construct the normal equation (step S72).

Next, the normal equation generation unit 1101 reads the calculated multiplication coefficient and bias coefficient, and generates Expressions (21) and (22) as the normal equation for a division region (step S73). Here, the corresponding division region is the right region when the left/right division process is performed in the horizontal direction and is the lower region when the up/down division process is performed in the vertical direction. Accordingly, the normal equation generation unit 1101 stores the calculated multiplication coefficient and bias coefficient in the multiplication coefficient storage unit 1104 and the bias coefficient storage unit 1105 (step S74).

Next, the normal equation solving unit 1102 obtains the solution of the normal equation generated by the normal equation generation unit 1101, and stores the solution as an IF coefficient in the filter coefficient storage unit 1072 (step S8). Subsequently, the prediction error power calculation unit 1103 calculates prediction error power when the IF coefficient calculated in the normal equation solving unit 1102 is used (step S9).

Next, the prediction error power sum calculation unit 105 receives inputs of prediction error powers output from the two prediction error power calculation units 1093 and 1103, and calculates an addition value of the two as a sum of prediction error powers within the frame to store the calculated addition value in the prediction error power sum storage unit 1071 (step S10). The minimum value determination unit 106 obtains a division position to which a minimum value is given among prediction error sums stored in the prediction error power sum storage unit 1071 and stores filter coefficients for two division regions when a division process has been performed at the same division position (step S11). The iterative process end determination unit 108 determines whether all candidates for the division position have been processed and outputs an instruction for iterating the process to the division region setting unit 104 if the process on all the candidates has not ended. At a point in time at which the process on all the candidates has ended, the iterative process end determination unit 108 obtains a division position at which the prediction error sum is minimized and outputs filter coefficients for the two division regions when the division process has been performed at the same division position (step S12).

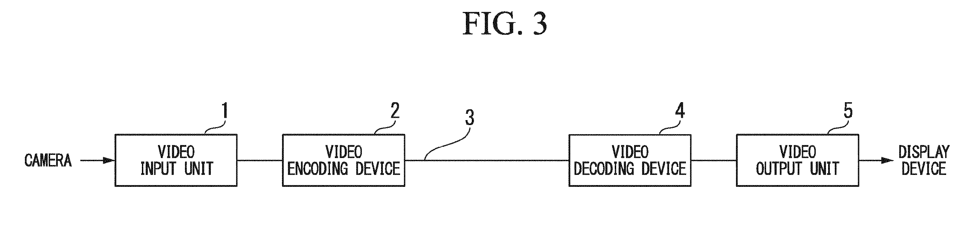

Next, a configuration of a video transmission system including the video encoding device illustrated in Fig. 1 will be described with reference to Fig. 3. Fig. 3 is a block diagram illustrating the configuration of the video transmission system. In Fig. 3, a video input unit 1 inputs a video captured by a camera or the like. Using an RBAIF (RBAIF illustrated in Fig. 1) in which a frame is divided into regions and an IF coefficient is adaptively set for each division region as an IF for generating an interpolated pixel value of a fractional pixel position, a video encoding device 2 performs motion-compensated inter-frame prediction corresponding to fractional pixel precision, and encodes a video input by the video input unit 1 to transmit the encoded video. A transmission path 3 transmits data of the encoded video transmitted from the video encoding device 2. A video decoding device 4 receives the data of the encoded video transmitted by the transmission path 3, and decodes and outputs the data of the encoded video. A video output unit 5 outputs the video decoded in the video decoding device 4 to a display device or the like.

Next, an operation of the video transmission system illustrated in Fig. 3 will be described. The video encoding device 2 receives an input of video data via the video input unit 1 and performs encoding for each video frame. At this time, an optimum division position of an image is calculated by the RBAIF illustrated in Fig. 1. The video encoding device 2 transmits the encoded video data to the video decoding device 4 via the transmission path 3. The video decoding device 4 decodes the encoded video data and displays the video on the display device or the like via the video output unit 5.

As described above, the RBAIF in which a frame is divided into regions and an IF coefficient is adaptively set for each division region is used as an IF for generating an interpolated pixel value of a fractional pixel position in a video encoding scheme including motion-compensated inter-frame prediction corresponding to fractional pixel precision. In addition, a process of constructing a linear simultaneous equation and solving the same equation is used as a process of calculating a filter coefficient of the same filter when an IF coefficient is obtained for a division region prescribed by each division position in a process of selecting an optimum division position from among candidates for a prepared division position. In this case, it is possible to omit a redundant process and reduce a calculation amount without degrading prediction performance when filter coefficients for different division shapes are calculated in a filter calculation process of the RBAIF associated with calculation of an optimum division position because a redundant calculation process is diverted in a filter coefficient calculation process in a different division region and only non-redundant difference information is newly calculated.

In addition, the RBAIF process may be performed by recording a program for implementing the function of each processing unit in Fig. 1 on a computer-readable recording medium and causing a computer system to read and execute the program recorded on the recording medium.

The "computer system" used herein may include an operating system (OS) and/or hardware such as peripheral devices. In addition, the "computer-readable recording medium" refers to a storage device including a flexible disk, a magneto-optical disc, a read only memory (ROM), a portable medium such as a compact disc-ROM (CD-ROM), and a hard disk embedded in the computer system. Further, it is assumed that the "computer-readable recording medium" includes a medium for storing programs for a fixed period of time like a volatile memory (random access memory (RAM)) inside a computer system including a server and a client when a program is transmitted via a network such as the Internet or a communication line such as a telephone line.

In addition, the above-described program may be transmitted from a computer system storing the program in a storage device or the like to other computer systems via a transmission medium or transmission waves of the transmission medium. Here, the "transmission medium" for transmitting the program refers to a medium having a function of transmitting information like a network (communication network) such as the Internet or a communication line (communication wire) such as a telephone line. The above-described program may be used to implement some of the above-described functions. Further, the program may be a so-called differential file (differential program) capable of implementing the above-described functions through combination with a program already recorded on the computer system.

INDUSTRIAL APPLICABILITY

The video encoding and video decoding related to the present invention are applicable for the purpose of reducing a calculation amount necessary to select an optimum region division while retaining prediction performance of an RBAIF.

[Description of Reference Symbols]

| | |
|---|---|
| 1 | Video input unit |
| 2 | Video encoding device |
| 3 | Transmission path |
| 4 | Video decoding device |
| 5 | Video output unit |
| 101 | Reference image storage unit |
| 102 | Motion vector-related information storage unit |
| 103 | Predicted image generation unit |
| 104 | Division region setting unit |
| 105 | Prediction error power sum calculation unit |
| 106 | Minimum value determination unit |
| 108 | Iterative process end determination unit |
| 109 | First region prediction error power calculation unit |
| 110 | Second region prediction error power calculation unit |
| 111 | Arithmetic element storage unit |
| 1071 | Prediction error power sum storage unit |
| 1072 | Filter coefficient storage unit |
| 1073 | Division position information storage unit |
| 1091 | Normal equation generation unit |
| 1092 | Normal equation solving unit |
| 1093 | Prediction error power calculation unit |
| 1094 | Multiplication coefficient storage unit |
| 1095 | Bias coefficient storage unit |
| 1096 | Multiplication coefficient difference value storage unit |
| 1097 | Bias coefficient difference value storage unit |
| 1101 | Normal equation generation unit |
| 1102 | Normal equation solving unit |
| 1103 | Prediction error power calculation unit |
| 1104 | Multiplication coefficient storage unit |
| 1105 | Bias coefficient storage unit |
| 1111 | SU auto-correlation coefficient calculation unit |
| 1112 | SU cross-correlation coefficient calculation unit |
| 1113 | SU auto-correlation coefficient storage unit |
| 1114 | SU cross-correlation coefficient storage unit |

**Claims**

1.  A video encoding device which performs motion-compensated inter-frame prediction corresponding to fractional pixel precision using a region-based adaptive interpolation filter (RBAIF) in which a frame is divided into regions and an IF coefficient is adaptively set for each division region as an IF that generates an interpolation pixel value of a fractional pixel position, the video encoding device comprising:

    an equation generation unit which constructs a linear simultaneous equation for obtaining an IF coefficient for a division region prescribed by a division position when an optimum division position is selected from among candidates for a prepared division position; and

an equation solving unit which obtains the IF coefficient by solving the linear simultaneous equation,
wherein the equation generation unit diverts a redundant arithmetic processing result in an arithmetic operation of calculating the IF coefficient in a different division region and generates an equation in which only non-redundant difference information is newly calculated using the arithmetic operation.

2. The video encoding device according to claim 1, wherein, when the difference information is calculated, necessary information is pre-calculated in each minimum unit of the region division, and necessary difference information is calculated using the pre-calculated information as necessary.

3. A video decoding device which decodes a video encoded by the video encoding device according to claim 1.

4. A video encoding method for use in a video encoding device which performs motion-compensated inter-frame prediction corresponding to fractional pixel precision using an RBAIF in which a frame is divided into regions and an IF coefficient is adaptively set for each division region as an IF that generates an interpolation pixel value of a fractional pixel position, the video encoding method comprising:

an equation generation step of constructing a linear simultaneous equation for obtaining an IF coefficient for a division region prescribed by a division position when an optimum division position is selected from among candidates for a prepared division position; and
an equation solving step of obtaining the IF coefficient by solving the linear simultaneous equation,
wherein the equation generation step includes diverting a redundant arithmetic processing result in an arithmetic operation of calculating the IF coefficient in a different division region and generating an equation in which only non-redundant difference information is newly calculated using the arithmetic operation.

5. The video encoding method according to claim 4, wherein, when the difference information is calculated, necessary information is pre-calculated in each minimum unit of the region division, and necessary difference information is calculated using the pre-calculated information if necessary.

6. A video decoding method of decoding a video encoded by the video encoding method according to claim 4.

7. A video encoding program for causing a computer on a video encoding device, which performs motion-compensated inter-frame prediction corresponding to fractional pixel precision using an RBAIF in which a frame is divided into regions and an IF coefficient is adaptively set for each division region as an IF that generates an interpolation pixel value of a fractional pixel position, to perform an encoding process, the process comprising:

an equation generation step of constructing a linear simultaneous equation for obtaining an IF coefficient for a division region prescribed by a division position when an optimum division position is selected from among candidates for a prepared division position; and
an equation solving step of obtaining the IF coefficient by solving the linear simultaneous equation,
wherein the equation generation step includes diverting a redundant arithmetic processing result in an arithmetic operation of calculating the IF coefficient in a different division region and generating an equation in which only non-redundant difference information is newly calculated using the arithmetic operation.

8. A video decoding program for decoding a video encoded by the video encoding program according to claim 7.

# FIG. 1

# FIG. 2

**DIVISION POSITION DETERMINATION PROCESS (IMAGE TO BE PREDICTED)**

S1 — READ REFERENCE IMAGE

S2 — READ MOTION VECTOR-RELATED INFORMATION NECESSARY FOR MOTION ESTIMATION PROCESS

S3 — PERFORM INTERFRAME PREDICTION PROCESS BASED ON MOTION COMPENSATION AND GENERATE PREDICTED IMAGE

S31 — CALCULATE AND STORE SU AUTO-CORRELATION COEFFICIENT

S32 — CALCULATE AND STORE SU CROSS-CORRELATION COEFFICIENT

ITERATIVELY PERFORM FOLLOWING PROCESS ON ALL CANDIDATES FOR DIVISION POSITION

S41 — ADD DIFFERENCE FROM STORED MULTIPLICATION COEFFICIENT AND CALCULATE NEW MULTIPLICATION COEFFICIENT

S71 — SUBTRACT DIFFERENCE FROM STORED MULTIPLICATION COEFFICIENT AND CALCULATE NEW MULTIPLICATION COEFFICIENT

S42 — ADD DIFFERENCE FROM STORED BIAS COEFFICIENT AND CALCULATE NEW BIAS COEFFICIENT

S72 — SUBTRACT DIFFERENCE FROM STORED BIAS COEFFICIENT AND CALCULATE NEW BIAS COEFFICIENT

S43 — OBTAIN NORMAL EQUATION FOR LEFT REGION (OR UPPER REGION) AFTER DIVISION PROCESS

S73 — OBTAIN NORMAL EQUATION FOR RIGHT REGION (OR LOWER REGION) AFTER DIVISION PROCESS

S44 — STORE MULTIPLICATION COEFFICIENT AND BIAS COEFFICIENT OF NORMAL EQUATION

S74 — STORE MULTIPLICATION COEFFICIENT AND BIAS COEFFICIENT OF NORMAL EQUATION

S5 — OBTAIN SOLUTION OF NORMAL EQUATION AND STORE OBTAINED SOLUTION AS IF COEFFICIENT

S8 — OBTAIN SOLUTION OF NORMAL EQUATION AND STORE OBTAINED SOLUTION AS IF COEFFICIENT

S6 — CALCULATE PREDICTION ERROR POWER WHEN IF COEFFICIENT IS USED

S9 — CALCULATE PREDICTION ERROR POWER WHEN IF COEFFICIENT IS USED

S10 — CALCULATE PREDICTION ERROR POWER SUM IN TWO REGIONS

S11 — STORE DIVISION POSITION AND IF COEFFICIENTS OF TWO REGIONS WHEN PREDICTION ERROR POWER SUM IS MINIMIZED

END ITERATIVE PROCESS

S12 — OUTPUT IF COEFFICIENTS OF TWO REGIONS AND DIVISION POSITION AT WHICH PREDICTION ERROR POWER SUM IS MINIMIZED

END

EP 2 709 362 A1

FIG. 3

EP 2 709 362 A1

# FIG. 4

# FIG. 5

```
┌─────────────────────────────┐
│     DIVISION POSITION        │
│   DETERMINATION PROCESS      │
│  (IMAGE TO BE PREDICTED)     │
└─────────────────────────────┘
              │
              ▼                    ～S1
┌─────────────────────────────┐
│      READ REFERENCE IMAGE    │
└─────────────────────────────┘
              │
              ▼                    ～S2
┌─────────────────────────────┐
│ READ MOTION VECTOR-RELATED INFORMATION │
│ NECESSARY FOR MOTION ESTIMATION PROCESS │
└─────────────────────────────┘
              │
              ▼                    ～S3
┌─────────────────────────────┐
│ PERFORM INTERFRAME PREDICTION PROCESS BASED ON │
│ MOTION COMPENSATION AND GENERATE PREDICTED IMAGE │
└─────────────────────────────┘
              │
              ▼
┌─────────────────────────────┐
│ ITERATIVELY PERFORM FOLLOWING PROCESS ON │
│ ALL CANDIDATES FOR DIVISION POSITION │
└─────────────────────────────┘
```

**S4** — OBTAIN NORMAL EQUATION FOR LEFT REGION (OR UPPER REGION) AFTER DIVISION PROCESS

**S7** — OBTAIN NORMAL EQUATION FOR RIGHT REGION (OR LOWER REGION) AFTER DIVISION PROCESS

**S5** — OBTAIN SOLUTION OF NORMAL EQUATION AND STORE OBTAINED SOLUTION AS IF COEFFICIENT

**S8** — OBTAIN SOLUTION OF NORMAL EQUATION AND STORE OBTAINED SOLUTION AS IF COEFFICIENT

**S6** — CALCULATE PREDICTION ERROR POWER WHEN IF COEFFICIENT IS USED

**S9** — CALCULATE PREDICTION ERROR POWER WHEN IF COEFFICIENT IS USED

**S10** — CALCULATE PREDICTION ERROR POWER SUM IN TWO REGIONS

**S11** — STORE DIVISION POSITION AND IF COEFFICIENTS OF TWO REGIONS WHEN PREDICTION ERROR POWER SUM IS MINIMIZED

END ITERATIVE PROCESS

**S12** — OUTPUT IF COEFFICIENTS OF TWO REGIONS AND DIVISION POSITION AT WHICH PREDICTION ERROR POWER SUM IS MINIMIZED

END

# INTERNATIONAL SEARCH REPORT

| | International application No. |
|---|---|
| | PCT/JP2012/065045 |

**A. CLASSIFICATION OF SUBJECT MATTER**
*H04N7/32*(2006.01)i

According to International Patent Classification (IPC) or to both national classification and IPC

**B. FIELDS SEARCHED**

Minimum documentation searched (classification system followed by classification symbols)
H04N7/32

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | Matsuo,S.,et al, CE3: Region-based adaptive interpolation filter, Joint Collaborative Team on Video Coding (JCT-VC)of ITU-T SG16 WP3 and ISO/IEC JTC1/SC29/WG11 5th Meeting JCTVC-E078, 2011.03.18 | 3,6,8<br>1,2,4,5,7 |

☐ Further documents are listed in the continuation of Box C.   ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 14 August, 2012 (14.08.12) | 21 August, 2012 (21.08.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011131127 A

**Non-patent literature cited in the description**

- **Y. VATIS ; B. EDLER ; D. NGUYEN ; J. OSTER-MANN.** Two-dimensional non-separable adaptive wiener interpolation filter for H.264/AVC. *ITU-TQ.6/SG16 VCEG,* April 2005
- **S. WITTMANN ; T. WEDI.** Separable adaptive interpolation filter for video coding. *IEEE International Conference on image Processing,* 2008, 2500-2503

- **K. P. LIM ; G. SULLIVAN ; T. WIEGAND.** Text description of joint model reference encoding methods and decoding concealment methods. *Technical Report R095, Joint Video Team (JVT) of ISO/IEC MPEG and ITU-T VCEG,* January 2006